# EUROPÄISCHE PATENTSCHRIFT

(11) **EP 0 833 411 B1**
(45) Veröffentlichungstag und Bekanntmachung des Hinweises auf die Patenterteilung: **31.01.2001**
(21) Anmeldenummer: 97113818.5
(22) Anmeldetag: 09.08.1997
(51) Int. Cl.: H01R 13/627, B60R 21/20

(54) **Elektrischer Steckverbinder**
Electrical connector
Connecteur électrique

(30) Priorität: 26.09.1996 DE 19639532
(43) Veröffentlichungstag der Anmeldung: 01.04.1998
(73) Patentinhaber: AMPHENOL-TUCHEL ELECTRONICS GmbH, D-74080 Heilbronn (DE)
(72) Erfinder: Annecke, Alfred, 74223 Flein (DE)
(74) Vertreter: Becker, Thomas, Dr., Dipl.-Ing.

(56) Entgegenhaltungen:
- EP-A- 0 591 948
- DE-A- 4 100 649
- DE-A- 4 317 344
- DE-B- 1 195 842
- GB-A- 2 245 775
- US-A- 2 425 992
- US-A- 3 409 858

## Beschreibung

Die Erfindung betrifft einen elektrischen Steckverbinder zur Verbindung mit einem zugehörigen Bauteil und zur gemeinsamen Anordnung in einer Lenksäule eines Kraftfahrzeugs.

Im besonderen betrifft die Erfindung einen elektrischen Steckverbinder, der mit einem Generator (einer Dose) sowie einem elektrischen Steuergerät verbindbar ist und gemeinsam mit dem Generator in einer Lenksäule eines Kraftfahrzeuges angeordnet wird, und zwar als Bestandteil eines aufblasbaren Rückhaltesystems (Airbag).

Ein solcher Steckverbinder ist aus der EP 0 591 948 A2 bekannt. Er hat eine eng limitierte Baugröße (zum Beispiel Länge: 2 bis 3 cm, Breite: ca. 1 cm, Höhe: 0,1 bis 1,0 cm).

Als Bestandteil eines Sicherheitssystems muß der Steckverbinder sicher auf dem Generator konfektionierbar sein und darf sich nicht unbeabsichtigt lösen. Neben der elektrischen Steckverbindung mit der Dose (Primärverriegelung) gibt es verschiedene Arten der Sekundärverriegelung des Steckverbinders.

In der EP 0 591 948 A2 wird dazu ein separates Verriegelungsglied vorgeschlagen, welches nachträglich montiert wird.

Andere Arten der zusätzlichen Verrastung (Sekundärverriegelung) von elektrischen Steckverbindern der gattungsgemäßen Art beschreiben die DE 43 17 344 A1, DE 44 30 358 A1, DE 41 00 649 A1, GB 2 245 775 A und US 3,409,858 A.

Der Erfindung liegt die Aufgabe zugrunde, eine weitere Ausführungsform eines Steckverbinders mit Sekundärverriegelung anzubieten, wobei über die Mittel zur Sekundärverriegelung weitere Funktionen erfüllt werden können.

Während im Stand der Technik die Sekundärverriegelung überwiegend im Bereich des Steckanschlusses zwischen Steckverbinder und Generator erfolgt, rückt die erfindungsgemäße Lehre davon ab und schafft über am Steckverbinder (Steckverbindergehäuse) angelenkte Laschen die Möglichkeit einer örtlich getrennten Verriegelung mit dem zugehörigen Generator, zum Teil unter Ausnutzung des Hohlkörpers (der Lenksäule) als Gegenlager für die Rastmittel.

In ihrer allgemeinsten Ausführungsform betrifft die Erfindung einen elektrischen Steckverbinder zur Verbindung mit einem zugehörigen Bauteil und zur gemeinsamen Anordnung in einer Lenksäule eines Kraftfahrzeugs mit den Merkmalen des Hauptanspruchs.

Um den Steckverbinder, nach Anschluß an einen zugehörigen Generator, in einer Lenksäule zu positionieren, wird die Baueinheit aus Steckverbinder und Generator von einer Seite in die Lenksäule hineingeschoben, wobei gleichzeitig die radial abstehenden Laschen durch die Wand der Lenksäule um etwa 90° abgebogen werden, so daß parallel dazu auch die von den Laschen abstehenden Nasen mitgeführt und in entsprechende Rastöffnungen hineingeführt werden können.

Vorzugsweise sind diese Rastöffnungen im umfangsseitigen Bereich des Generators angeordnet, so daß die Sekundärverriegelung zwischen Steckverbinder und Generator wirkt. In diesem Fall sind die Rastnasen (Vorsprünge) in Richtung auf den Steckanschluß des Steckverbinders (die Primärverriegelung) ausgerichtet. Beim Einschieben der Baueinheit von Steckverbinder und Generator sind die Rastnasen in ihrer Endstellung dann senkrecht zur Lenksäule ausgerichtet und ragen mit ihrem freien Ende in die korrespondierenden Öffnungen des Generators hinein, während sie sich laschenseitig zum Beispiel an der Innenwand der Lenksäule abstützen, soweit keine feste Verrastung der Rastnasen in den Öffnungen des Generators erfolgt.

Die nachfolgende Figurenbeschreibung gibt hierzu weitere Hinweise.

Gleichzeitig erfüllen die Laschen eine Art Zentrierungs- und Justierungsfunktion für den Steckverbinder innerhalb der Lenksäule. Gleichzeitig können Toleranzen bei schwimmender Lagerung des Steckverbinders in der Lenksäule ausgeglichen werden.

Eine rotationssymmetrische Anordnung der Laschen am Steckverbinder(gehäuse) optimiert die beschriebene Zentrierungs-und Justierungsfunktion.

Konstruktiv einfach und wirkungsvoll ist die Anordnung von insgesamt drei Laschen im Winkel von etwa 120° zueinander.

Aufgrund der beengten räumlichen Verhältnisse in der Lenksäule wird die Abbiegung der Laschen gegenüber dem Steckverbindergehäuse üblicherweise unmittelbar im Anschlußbereich erfolgen. Um einen möglichst engen Krümmungsradius auszubilden, sind die Laschen entlang eines Gelenkbereiches biegbar gestaltet.

Wegen der eingangs beschriebenen geringen Baugröße des Steckverbinders (Gehäuses), welches aus einem Isoliermaterial, üblicherweise Kunststoff, besteht, sieht eine Ausführungsform vor, den Gelenkbereich nach Art eines Filmscharniers auszubilden, also im wesentlichen durch eine Materialschwächung.

Um Kabel anzuschließen oder elektrische Bauteile anzuordnen ist es bekannt, das Steckverbindergehäuse zweiteilig zu gestalten. Dies kann auch hier erfolgen. Die Sicherheit der Verrastung von Gehäuseober- und -unterteil kann bei einem erfindungsgemäßen Steckverbinder dadurch erhöht werden, indem die Laschen am Gehäuseoberteil angelenkt werden, also an dem Teil, der vom zugehörigen Generator abgewandt angeordnet ist. Auf diese Weise wird durch die Laschen und Rastnasen das Gehäuseoberteil zusätzlich gegen das Gehäuseunterteil und damit gegen die Dose festgelegt.

Der beschriebene Steckverbinder erfüllt bei einfacher konstruktiver Gestaltung hohe Sicherheitsanforderungen und schafft zudem die Möglichkeit einer verbesserten Positionierung des zugehörigen Bauteils in der Lenksäule eines Kraftfahrzeuges.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher erläutert.

Dabei zeigen:
- Figur 1:: einen Längsschnitt durch die Lenksäule eines Kraftfahrzeuges mit eingesetztem Steckverbinder und zugehörigem Generator,
- Figur 2:: eine Aufsicht auf den steckseitigen Bereich des Steckverbinders nach Figur 1.

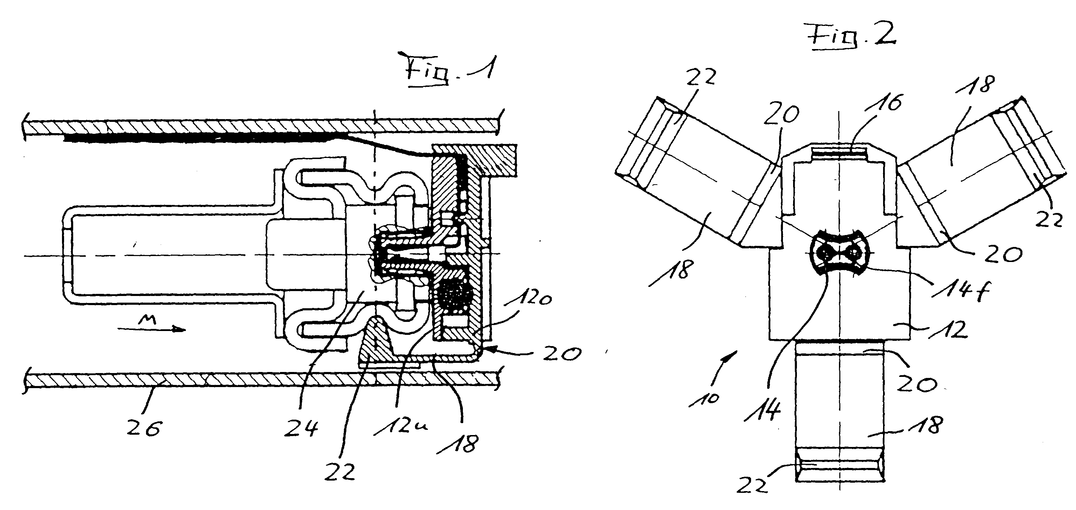

Der in Figur 2 dargestellte Steckverbinder 10 umfaßt ein Gehäuse 12 mit einem senkrecht abstehenden Steckanschluß 14 und einem zum Steckanschluß parallelen Kabelausgang 16 sowie drei Laschen 18, die im Winkel von ca. 120° zueinander am Oberteil des Gehäuses 12 materialschlüssig angelenkt sind. Im Anschlußbereich zwischen Gehäuse 12 und Lasche 18 befindet sich jeweils eine Materialschwächung zur Ausbildung eines Filmscharniers 20, welches die Abwinklung der Laschen 18 gegenüber dem Gehäuse 12 ermöglicht.

Von der Unterseite jeder Lasche 18 steht eine Rastnase 22 senkrecht ab.

Bei der Darstellung nach Figur 2 stehen die Rastnasen 22 danach in gleicher Richtung von den Laschen 18 ab wie der Steckanschluß 14 vom Gehäuse 12 (Gehäuseunterteil).

Figur 1 zeigt die Anordnung des Steckverbinders nach Figur 2 in Verbindung mit einem zugehörigen Generator 24 nach Positionierung in einer Lenksäule 26 eines Kraftfahrzeuges.

Zunächst wird der Steckverbinder 10 mit seinen Kontaktfedern 14f des Steckanschlusses 14 auf zugehörige Kontaktstifte des Generators 24 gesteckt.

Anschließend wird die Baueinheit aus Steckverbinder 10 und Generator 24 in Pfeilrichtung M in die Lenksäule 26 geführt. Dabei stoßen die Laschen 18 gegen die Wand der Lenksäule 26 und biegen sich um ca. 90° entlang der Filmscharniere 20 bis in die in Figur 1 dargestellte Position um, wobei diese endseitigen Rastnasen 22 gleichzeitig in korrespondierende umfangsseitige Sicken 28 des Generators 24 geführt werden.

Diese Position kennzeichnet die Montageposition, wobei die Rastnasen 22 in den Sicken 28 einliegen und sich mit ihrem rückwärtigen Ende (Anschlußbereich zu den Laschen) an der Innenwand der Lenksäule 26 abstützen, wobei über eine gewisse Elastizität des Kunststoffmaterials der Laschen 18 und Rastnasen 22 eine gewisse Verformbarkeit und damit Justierbarkeit und ein Ausgleich von Toleranzen innerhalb der Lenksäule möglich wird.

Figur 1 zeigt, daß die Laschen am Gehäuseoberteil 12o angelenkt sind und damit in der Montageposition (Verriegelungsposition) der Gehäuseoberteil 12o gleichzeitig gegen den Gehäuseunterteil 12u gepreßt wird.

Die Darstellung nach Figur 1 zeigt gleichzeitig, daß nur durch Entnahme der Kombination von Steckverbinder 10 und Generator 24 aus der Lenksäule 26 der Steckverbinder 10 vom Generator 24 wieder gelöst werden kann.

## Patentansprüche

1. Elektrischer Steckverbinder zur Verbindung mit einem zugehörigen Bauteil (24) und zur gemeinsamen Anordnung in einer Lenksäule eines Kraftfahrzeuges (26) mit folgenden Merkmalen:
1.1 vom Steckverbinder (10) stehen mindestens zwei Laschen (18) radial ab,
1.2 von den Laschen (18) stehen Rastnasen (22) senkrecht ab,
1.3 die Laschen sind zwischen den Rastnasen (22) und dem Anschlußbereich an den Steckverbinder (10) entlang eines Gelenkbereiches (20) biegbar gestaltet,
1.4 die Laschen (18) sind so ausgebildet, daß sie sich beim Einschieben des Steckverbinders in die Lenksäule des Kraftfahrzeuges um etwa 90° abbiegen und die Rastnasen (22) in der Montageposition des Steckverbinders in der Lenksäule in korrespondierende Rastöffnungen (28) des zugehörigen Bauteils (24) eingreifen und eine Sekundärverriegelung schaffen.

2. Steckverbinder nach Anspruch 1, bei dem die Laschen (18) rotationssymmetrisch verteilt angeordnet sind.

3. Steckverbinder nach Anspruch 1 mit drei, im Winkel von etwa 120° zueinander verlaufenden Laschen (18).

4. Steckverbinder nach Anspruch 1, bei dem der Gelenkbereich (20) nach Art eines Filmscharniers gestaltet ist.

5. Steckverbinder nach Anspruch 1 mit einem zweiteiligen Gehäuse (12), bei dem die Laschen (18) an dem vom zugehörigen Bauteil (24) abgewandten Gehäuseteil (12o) angelenkt sind.

6. Steckverbinder nach Anspruch 1, bei dem die Rastnasen (22) in Richtung auf den Steckanschluß (14) des Steckverbinders (10) von den Laschen (18) abstehen.

7. Steckverbinder nach Anspruch 1, bei dem die Laschen (18) materialschlüssig mit dem Steckverbindergehäuse 12 verbunden sind.

8. Steckverbinder nach Anspruch 1, mit einer Kabelführung, bei der das aus dem Steckverbindergehäuse austretende Kabel in Richtung auf das zugehörige Bauteil (24) verläuft.

## Claims

1. An electrical connector for connecting it to an associated component (24) and for disposing them together within a steering column (26) of a motor vehicle, having the following features:
1.1 at least two tongues (18) project radially from the connector (10),
1.2 detents (22) project perpendicularly from the tongues (18),
1.3 the tongues are formed to be flexible along a hinge region (20) between the detents (22) and the connecting region to the connector (10),
1.4 the tongues (18) are designed such that when the connector is inserted into the steering column the tongues are bent at about 90° and the detents (22), when the connector is in the mounted position in the steering column, project into corresponding indents (28) of the corresponding component (24) and cause a secondary locking.

2. The connector according to claim 1, wherein the tongues (18) are arranged in rotationally symmetrical manner.

3. The connector according to claim 1, having three tongues (18) extending at an angle of about 120° with respect to each other.

4. The connector according to claim 1, wherein the hinge region (20) is formed like a film hinge.

5. The connector according to claim 1, having a two-piece shell (12), the tongues (18) being hinged to a shell part (12o) opposite to the associated component (24).

6. The connector according to claim 1, wherein the detents (22) project from the tongues (18) in the direction towards a plug-in termination (14) of the connector.

7. The connector according to claim 1, wherein the tongues (18) are connected to the connector shell 12 with material-fit.

8. The connector according to claim 1, having a cable guide, in which the cable coming out of a connector shell extends in the direction towards the associated component (24).

## Revendications

1. Connecteur électrique pour la jonction avec un composant (24) associé et pour le montage commun dans une colonne de direction d'un véhicule automobile (26), présentant les caractéristiques suivantes :
1.1 au moins deux barres de liaison (18) s'écartent radialement du connecteur (10),
1.2 des taquets d'arrêt (22) s'écartent perpendiculairement des barres de liaison (18),
1.3 les barres de liaison sont réalisées flexibles entre les taquets d'arrêt (22) et la zone de raccordement au connecteur (10) le long d'une zone articulée (20),
1.4 les barres de liaison (18) sont réalisées de telle sorte que, lors de l'introduction du connecteur dans la colonne de direction du véhicule automobile, elles se plient à 90° environ et que les taquets d'arrêt (22) s'engagent dans la position de montage du connecteur dans la colonne de direction dans des ouvertures d'arrêt (28) correspondantes du composant (24) associé et établissent un verrouillage secondaire.

2. Connecteur selon la revendication 1, dans lequel les barres de liaison (18) sont disposées de façon à être réparties en symétrie de rotation.

3. Connecteur selon la revendication 1, dans lequel sont prévues trois barres de liaison (18) disposées l'une par rapport à l'autre selon un angle de 120° environ.

4. Connecteur selon la revendication 1, dans lequel la zone articulée (20) est réalisée à la façon d'un film charnière.

5. Connecteur selon la revendication 1, dans lequel il est prévu un boîtier (12) en deux parties dans lequel les barres de liaison (18) sont articulées sur la partie de boîtier (120) éloignée du composant (24) associé.

6. Connecteur selon la revendication 1, dans lequel les taquets d'arrêt (22) s'éloignent des barres de liaison (18) en direction du raccordement à fiches (14) du connecteur (10).

7. Connecteur selon la revendication 1, dans lequel les barres de liaison (18) sont assemblées avec le boîtier (12) du connecteur de façon ajustée au niveau de la matière.

8. Connecteur selon la revendication 1, dans lequel il est prévu un guidage de câblage dans lequel le câble sortant du boîtier du connecteur passe en direction du composant (24) associé.
